# EUROPEAN PATENT APPLICATION

(11) **EP 4 847 906 A1**
(43) Date of publication of application: **02.12.2026**
(21) Application number: 25768090.0
(22) Date of filing: 05.02.2025
(51) Int. Cl.: G01N 17/04, G01N 27/00, G01N 27/04

(54) **MEASUREMENT METHOD FOR CORROSION AMOUNT AND SELECTION METHOD FOR METAL MATERIAL**

(30) Priority: 06.03.2024 JP 2024033799
(71) Applicant: JFE Steel Corporation, Tokyo 100-0011 (JP)
(72) Inventor: OMODA, Masataka, Chiyoda-ku, Tokyo 100-0011 (JP); OTSUKA, Shinji, Chiyoda-ku, Tokyo 100-0011 (JP)
(74) Representative: Grünecker Patent- und Rechtsanwälte PartG mbB
(86) International application number: PCT/JP2025/003791
(87) International publication number: WO 2025/187307

(57) **Abstract**

An electric resistance type corrosion sensor 1 is attached to a metal portion 16 of a moving object 15. The corrosion sensor 1 includes a sensor portion 2 exposed to a given environment and a reference portion 3 isolated from the given environment, and an electric conductor constituting each of the sensor portion 2 and the reference portion 3 is made of the same metal material as a metal material constituting the metal portion 16. The corrosion loss of the sensor portion 2 is measured based on an electric resistance value of the reference portion 3 and an electric resistance value of the sensor portion 2. This configuration makes it possible to acquire an accurate corrosion loss of the metal portion 16 of the moving object 15.

## Description

### TECHNICAL FIELD

The present invention relates to a method of measuring corrosion loss and a method of selecting a metal material.

### BACKGROUND ART

Moving objects such as automobiles, vessels, aircraft, and heavy equipment have, at least in part thereof, a metal portion constituted of a metal material. A moving object is a concept also covering movable objects such as cranes and belt conveyors (hereinafter the same).

A metal portion of a moving object is damaged or deteriorates over time. One of causes of damage and deterioration is corrosion.

To use a moving object safely for a long time, it is important to know the corrosion loss (corrosion rate) of a metal portion of the moving object in the state where the moving object is in actual use.

When a moving object is moved, the way a metal portion of the moving object is exposed to sunlight changes, for example.

This causes the change in wet and dry conditions, the condition of attachment and detachment of corrosive substances such as airborne salt, and other conditions at the metal portion of the moving object.

Thus, the corrosion loss of a metal portion of a moving object greatly changes depending on the movement of the moving object, the position of the metal portion in the moving object, and other factors.

As a technique for knowing the corrosion loss of a metal portion of a moving object, for instance, Patent Literature 1 discloses "a method of measuring a corrosion environment of a moving object, characterized in that, at one or more parts of a moving object at least partially made of a metal material, there are installed one or more corrosion sensors that have two kinds of metal electrodes different in component and/or composition, one kind thereof is a metal material to be selected for a constituent component of a moving object material, the other one thereof is made of the same metal different from the one kind and also made of a metal that is more noble in the electrochemical series than the one kind, at least one pair of electrodes are disposed with a clearance of 0.1 to 5 mm across an insulator, an electric current or a potential difference between electrodes caused by electric short circuit of the electrodes in a corrosion environment is measured continuously or intermittently also during the moving time, and installation position of the corrosion sensor includes an inside isolated from the outside of the moving object or an inside of a constituent part of the moving object" ([claim 1]).

In Patent Literature 1, an ACM type corrosion sensor (Non-Patent Literatures 1 and 2) is used.

### CITATION LIST

### PATENT LITERATURE

Patent Literature 1: JP 2009-53205 A

### NON-PATENT LITERATURES

Non-Patent Literature 1: Zairyo-to-Kankyo, Japan Society of Corrosion Engineering, 2005, vol. 54, no. 8, pp. 375-382
Non-Patent Literature 2: Zairyo-to-Kankyo, Japan Society of Corrosion Engineering, 2002, vol. 51, no. 9, pp. 398-403

### SUMMARY OF INVENTION

### TECHNICAL PROBLEMS

In an Atmospheric Corrosion Monitor (ACM) type corrosion sensor, a galvanic current flowing across two different metals exposed in a corrosion environment in the state of being insulated from each other is measured, and corrosion loss is obtained based on an experimental formula.

However, since corrosion proceeds due to various causes being intertwined, the corrosion loss determined with an ACM type corrosion sensor does not necessarily fully match with the actual corrosion loss in some cases.

The present invention has been made in view of the foregoing and aims at providing a method of measuring corrosion loss that makes it possible to accurately know the corrosion loss of a metal portion of a moving object.

### SOLUTION TO PROBLEMS

The present inventors found, through an earnest study, that the above object is achieved when the configuration described below is employed. The invention has been thus completed.

Specifically, the present invention provides the following [1] to [10].
[1] A method of measuring corrosion loss, the method comprising:
   attaching a corrosion sensor to a metal portion of a moving object having the metal portion constituted of a metal material, wherein the corrosion sensor is an electric resistance type corrosion sensor including a sensor portion constituted of an electric conductor exposed to a given environment and a reference portion constituted of an electric conductor isolated from the given environment, and each of the electric conductors is made of a same metal material as the metal material constituting the metal portion; and
   measuring the corrosion loss of the sensor portion based on an electric resistance value of the reference portion and an electric resistance value of the sensor portion.
[2] The method of measuring corrosion loss according to [1] above,
   wherein the corrosion sensor has an insulating sheet, and
   the reference portion is in contact with the metal portion via only the insulating sheet.
[3] The method of measuring corrosion loss according to [2] above,
   wherein the insulating sheet has a thermal transmittance of not less than 25 kW/(m²·K).
[4] The method of measuring corrosion loss according to any one of [1] to [3] above,
   wherein the sensor portion and the reference portion are stacked via an insulator.
[5] The method of measuring corrosion loss according to any one of [1] to [3] above,
   wherein the corrosion loss of the sensor portion as measured is acquired at a place away from the moving object via communication using a communication device.
[6] The method of measuring corrosion loss according to [4] above,
   wherein the corrosion loss of the sensor portion as measured is acquired at a place away from the moving object via communication using a communication device.
[7] A method of selecting a metal material, the method comprising selecting the metal material constituting the metal portion based on the corrosion loss of the sensor portion that is measured by the method of measuring corrosion loss according to any one of [1] to [3] above.
[8] A method of selecting a metal material, the method comprising selecting the metal material constituting the metal portion based on the corrosion loss of the sensor portion that is measured by the method of measuring corrosion loss according to [4] above.
[9] A method of selecting a metal material, the method comprising selecting the metal material constituting the metal portion based on the corrosion loss of the sensor portion that is measured by the method of measuring corrosion loss according to [5] above.
[10] A method of selecting a metal material, the method comprising selecting the metal material constituting the metal portion based on the corrosion loss of the sensor portion that is measured by the method of measuring corrosion loss according to [6] above.

### ADVANTAGEOUS EFFECTS OF INVENTION

According to the invention, it is possible to accurately comprehend the corrosion loss of a metal portion of a moving object.

### BRIEF DESCRIPTION OF DRAWINGS

[FIG. 1] FIG. 1 is a plan view schematically showing a corrosion sensor of a first embodiment.
[FIG. 2] FIG. 2 is a cross-sectional view taken along line A-A of FIG. 1.
[FIG. 3] FIG. 3 is a plan view schematically showing a corrosion sensor of a second embodiment.
[FIG. 4] FIG. 4 is a cross-sectional view taken along line B-B of FIG. 3.
[FIG. 5] FIG. 5 is a cross-sectional view of a corrosion sensor for illustration of the state of connection between a current source and a voltage measurement portion.
[FIG. 6] FIG. 6 is a figure showing the state where a corrosion sensor 1 is attached to a metal portion of a moving object.

### DESCRIPTION OF EMBODIMENTS

### [Method of measuring corrosion loss]

A method of measuring corrosion loss according to the invention is described below. The following description also covers a method of selecting a metal material according to the invention.

In the method of measuring corrosion loss according to the invention, first, an electric resistance type corrosion sensor is attached to a metal portion of a moving object. The corrosion sensor includes a sensor portion that is exposed to a given environment and a reference portion isolated from the given environment. Electric conductors constituting the sensor portion and the reference portion are made of the same metal material as a metal material constituting the metal portion of the moving object. Then, corrosion loss of the sensor portion is measured based on an electric resistance value of the reference portion and an electric resistance value of the sensor portion.

In the present invention, the electric conductor of the corrosion sensor is made of the same metal material as that of the metal portion of the moving object, and the corrosion loss is determined directly from an electric resistance value without use of an experimental formula. This configuration makes it possible to accurately know the corrosion loss of the metal portion of the moving object.

### <Corrosion sensor>

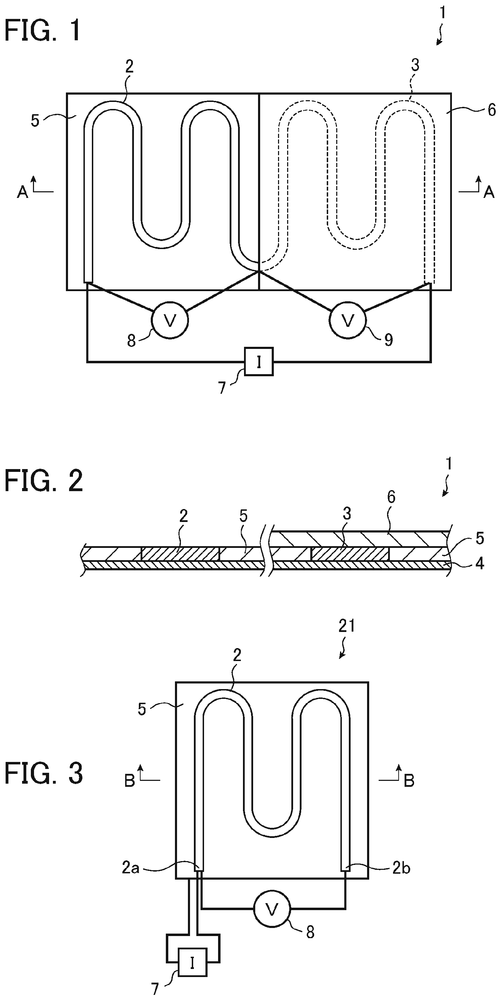

First, the basic configuration of an electric resistance type corrosion sensor used in the present invention is described with reference to FIGS. 1 and 2 (first embodiment) and FIGS. 3 to 5 (second embodiment).

However, a corrosion sensor usable for the present invention is not limited to the following embodiments.

### <<First embodiment>>

FIG. 1 is a plan view schematically showing a corrosion sensor 1 of the first embodiment. FIG. 2 is a cross-sectional view taken along line A-A of FIG. 1.

The electric resistance type corrosion sensor 1 includes a sensor portion 2 that is exposed to a given environment and a reference portion 3 that is isolated from the given environment to which the sensor portion 2 is exposed.

The sensor portion 2 and the reference portion 3 are both constituted of an electric conductor and are disposed in parallel on one surface of an insulating sheet 4 of flat plate shape.

The "given environment" to which the sensor portion 2 is exposed is a concept encompassing various environments including a "corrosion environment" where the sensor portion 2 would corrode.

That is, the corrosion sensor 1 may be used not only in a corrosion environment where the sensor portion 2 corrodes but also in an environment where the sensor portion 2 does not corrode.

As shown in FIG. 2, the sensor portion 2 and the reference portion 3 each have a cross section of a rectangular shape (including a square shape) having a predetermined thickness. The opposite lateral surfaces of each of the sensor portion 2 and the reference portion 3 are covered by an insulating resin 5, and the upper surface of the reference portion 3 is covered by an insulating cover 6.

Thus, when the corrosion sensor 1 is viewed in cross section, the opposite lateral surfaces as well as the upper and lower surfaces of the reference portion 3 of rectangular shape are covered by respective members, as shown in FIG. 2. Accordingly, even when the corrosion sensor 1 is present in a corrosion environment, the reference portion 3 is isolated from this corrosion environment.

Meanwhile, the upper surface of the sensor portion 2 is not covered by the cover 6.

Specifically, as shown in FIG. 2, when the corrosion sensor 1 is viewed in cross section, while the opposite lateral surfaces and the lower surface of the sensor portion 2 of rectangular shape are covered by respective members, the upper surface thereof is exposed.

Accordingly, when the corrosion sensor 1 is present in a corrosion environment, the upper surface of the sensor portion 2 is exposed to this corrosion environment. In the sensor portion 2 with its upper surface being exposed to the corrosion environment, corrosion proceeds in the thickness direction (direction from the upper surface toward the lower surface) of the sensor portion 2.

Next, each portion of the corrosion sensor 1 is described below in more detail.

### (Insulating sheet)

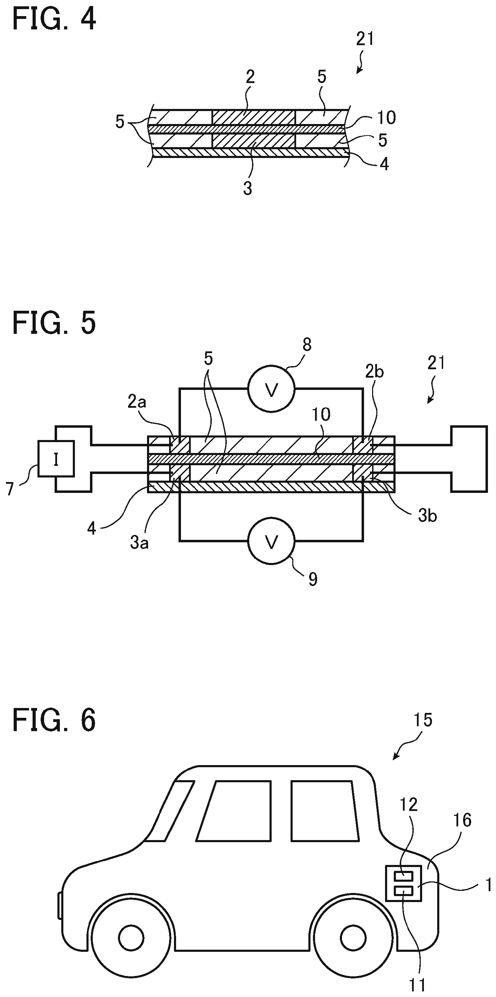

The temperature of the reference portion 3 of the corrosion sensor 1 is preferably adjusted to coincide with the temperature of a metal portion 16 of a moving object 15 (see FIG. 6), as described later.

For this reason, when the corrosion sensor 1 is attached to the metal portion 16, the reference portion 3 (and the sensor portion 2) is preferably placed in contact with the metal portion 16 via only the insulating sheet 4.

The material of the insulating sheet 4 is not particularly limited as long as the material prevents the reference portion 3 and the sensor portion 2 from being electrically connected to the metal portion 16 of the moving object 15, and examples thereof include glass, ceramics, plastic (synthetic resin), and natural resin.

Preferably, the insulating sheet 4 has good thermal conductivity, i.e., is highly thermally conductive (is high in thermal conductivity).

Specifically, the insulating sheet 4 has a thermal conductivity of preferably not less than 0.3 W/(m·K), more preferably not less than 0.5 W/(m·K), and even more preferably not less than 1.0 W/(m·K). The insulating sheet 4 may have a thermal conductivity of not less than 3.0 W/(m·K).

The upper limit thereof is not particularly limited, and the thermal conductivity of the insulating sheet 4 is for example not more than 100.0 W/(m·K), may be not more than 50.0 W/(m·K), may be not more than 30.0 W/(m·K), and may be not more than 10.0 W/(m·K).

A favorable material of the insulating sheet 4 as above is polyimide, for example.

The thickness (length in the vertical direction in FIG. 2) of the insulating sheet 4 only needs to be a thickness capable of insulating the reference portion 3 and the sensor portion 2 from the metal portion 16 and is for instance not less than 5 µm and preferably not less than 10 µm.

Meanwhile, the thickness of the insulating sheet 4 is preferably not more than 50 µm, more preferably not more than 40 µm, and even more preferably not more than 30 µm for the sake of having good thermal conductivity.

The insulating sheet 4 has a thermal transmittance of preferably not less than 25 kW/(m²·K), more preferably not less than 40 kW/(m²·K), even more preferably not less than 70 kW/(m²·K), and most preferably not less than 100 kW/(m²·K) for the reason that the temperature of the reference portion 3 easily coincides with the temperature of the moving object 15 (metal portion 16). The upper limit thereof is not particularly limited, and a larger thermal transmittance is more preferred.

The thermal transmittance of the insulating sheet 4 can be obtained by dividing the thermal conductivity (unit: kW/(m·K)) of the insulating sheet 4 by the thickness (unit: m) of the insulating sheet 4.

### (Resin)

The material of the resin 5 is not particularly limited and can make use of a conventionally known material; examples thereof include an epoxy resin, a phenolic resin, polyethylene terephthalate (PET), polytetrafluoroethylene (PTFE), and nylon.

The thickness of the resin 5 follows the thickness of each of the sensor portion 2 and the reference portion 3.

### (Cover)

The material of the cover 6 is not particularly limited and can make use of a conventionally known material; examples thereof include rubber and paint, and a material having weather resistance is preferred.

The thickness of the cover 6 is not particularly limited and is for example 0.1 to 10 mm.

### (Sensor portion and reference portion)

An electric conductor constituting the sensor portion 2 and the reference portion 3 is made of the same metal material as a metal material constituting the metal portion 16 of the moving object 15 (see FIG. 6).

Examples of such a metal material include iron and an iron alloy.

The iron content of an iron alloy is preferably not less than 90 mass%. Exemplary elements that may be contained in an iron alloy except for iron include: at least one element selected from the group consisting of carbon, silicon, manganese, phosphorus, and sulfur; and elements such as copper and nickel that improve corrosion resistance.

The electric conductors constituting the sensor portion 2 and the reference portion 3 preferably have an elongated shape with a predetermined length, and an example of such a shape is a meandering shape bending at constant intervals as shown in FIG. 1.

The sensor portion 2 and the reference portion 3 may be a continuous elongated electric conductor as shown in FIG. 1, for instance.

The length (entire length) of the sensor portion 2 is preferably not less than 30 mm and more preferably not less than 100 mm. At the same time, the length (entire length) of the sensor portion 2 is preferably not more than 500 mm and more preferably not more than 400 mm.

When the sensor portion 2 is viewed in cross section as shown in FIG. 2, the width (horizontal distance in FIG. 2) of the sensor portion 2 is preferably not less than 4 mm and more preferably not less than 5 mm for the purpose of averaging and mitigating the influence of sharp increase in electric resistance as a whole even when deep corrosion is locally generated at the upper surface (top surface) of the sensor portion 2.

Meanwhile, an excessively large width of the sensor portion 2 may lead to too low electric resistance, and this may cause difficulty in accurate measurement; therefore, the width is preferably not more than 15 mm, more preferably not more than 12 mm, and even more preferably not more than 10 mm.

The thickness (vertical distance in FIG. 2) of the sensor portion 2 is preferably not less than 50 µm and more preferably not less than 100 µm for the sake of processability of an electric conductor when the sensor portion 2 is obtained by processing the electric conductor.

At the same time, the thickness of the sensor portion 2 is preferably not more than 1000 µm and more preferably not more than 600 µm for the purpose of improving the measurement accuracy of the corrosion sensor 1.

The reference portion 3 preferably has the same shape as that of the sensor portion 2. This configuration makes it unnecessary to correct the difference in electric resistance value resulting from the shape difference from the sensor portion 2.

The foregoing numerical ranges related to the sensor portion 2 and the reference portion 3 are determined from the viewpoints of, for example, measurement accuracy of the corrosion sensor 1, convenience of handling of the corrosion sensor 1, the corrosion loss, and the form of corrosion.

### (Current source and voltage measurement portion)

As described above, the sensor portion 2 and the reference portion 3 may be a continuous electric conductor.

In this case, a current source 7 is connected to the opposite ends of the continuous electric conductor constituting the sensor portion 2 and the reference portion 3, a voltage measurement portion 8 is connected to the opposite ends of the sensor portion 2, and a voltage measurement portion 9 is connected to the opposite ends of the reference portion 3.

Constant current is applied from the current source 7, and voltage is measured at the voltage measurement portion 8 and the voltage measurement portion 9, whereby an electric resistance value of each of the sensor portion 2 and the reference portion 3 is obtained.

Then, the corrosion loss of the sensor portion 2 is calculated based on the obtained electric resistance value, as described below.

### (Logger)

The corrosion sensor 1 preferably further includes a logger 11 (see FIG. 6).

For instance, the logger 11 drives the current source 7 to allow constant current to flow, causes the voltage measurement portion 8 and the voltage measurement portion 9 to measure voltage to thereby determine electric resistance values of the sensor portion 2 and the reference portion 3, and calculates the corrosion loss of the sensor portion 2 based on the obtained electric resistance values, at given intervals.

The logger 11 can record the calculated corrosion loss and other data.

### (Communication device)

Preferably, the corrosion sensor 1 further includes a communication device 12 (see FIG. 6).

Various kinds of data recorded on the logger 11 are uploaded to cloud via communication using the communication device 12.

### <<Second embodiment>>

Next, a corrosion sensor 21 in a second embodiment is described by reference to FIGS. 3 to 5. The same portions as those of the first embodiment described with reference to FIGS. 1 and 2 are assigned the same references and will not be described.

FIG. 3 is a plan view schematically showing the corrosion sensor 21 in the second embodiment. FIG. 4 is a cross-sectional view taken along line B-B of FIG. 3 and provides an enlarged view of the sensor portion 2 and the reference portion 3 and therearound.

As shown in FIG. 4, the reference portion 3 formed of an electric conductor is disposed on the insulating sheet 4. The sensor portion 2 formed of an electric conductor is disposed on one surface of the reference portion 3 via an insulator 10 on the side opposite from the insulating sheet 4. In other words, the sensor portion 2 and the reference portion 3 are stacked via the insulator 10.

The material of the insulator 10 is not particularly limited as long as the material does not allow electrical connection between the sensor portion 2 and the reference portion 3, and examples thereof include glass, ceramics, plastic (synthetic resin), and natural resin.

If the insulator 10 has poor thermal conductivity, a temperature difference is likely to be generated between the sensor portion 2 and the reference portion 3. Accordingly, it is preferable to select a material having as high thermal conductivity as possible.

When the insulator 10 is too thick, the thermal conductivity tends to be poor, and when it is too thin, the risk of electric short circuit tends to arise.

A suitable thickness of the insulator 10 varies depending on the material thereof and is, for example, preferably 5 to 200 µm when the insulator 10 is formed of a plastic film of polyvinyl chloride, polyethylene, polypropylene, or the like.

Preferably, the insulator 10 is closely adhered to the sensor portion 2 and the reference portion 3 without a gap. This is because, if a gap is formed, the thermal conductivity is likely to be impaired.

Accordingly, it is preferable that the insulator 10, the sensor portion 2, and the reference portion 3 are pressure-bonded together with sufficient force or bonded together with the use of a thermally conductive adhesive. In the bonding process, it is preferable to sufficiently wash the surfaces to be bonded such that no dirt or dust remains thereon.

FIG. 5 is a cross-sectional view of the corrosion sensor 21 for describing the state of connection between the current source 7 and the voltage measurement portion 8.

As shown in FIG. 5, the voltage measurement portion 8 is connected to a terminal 2a being one end of the sensor portion 2 and a terminal 2b being the other end thereof, and the voltage measurement portion 9 is connected to a terminal 3a being one end of the reference portion 3 and a terminal 3b being the other end thereof.

The terminal 2b of the sensor portion 2 and the terminal 3b of the reference portion 3 are electrically connected to each other, and the terminal 2a of the sensor portion 2 and the terminal 3a of the reference portion 3 are connected to the current source 7.

In the following description, the "corrosion sensor 21" is also called the "corrosion sensor 1" for convenience, unless otherwise noted.

The corrosion sensor 1 as above is attached to the metal portion 16 of the moving object 15.

### <Moving object (attachment of corrosion sensor to moving object)>

FIG. 6 is a figure showing the state where the corrosion sensor 1 is attached to the metal portion 16 of the moving object 15. FIG. 6 shows the case where the moving object 15 is an automobile. However, the moving object 15 is not limited to an automobile, and examples thereof include vessels, aircraft, and heavy equipment in addition to automobiles. Examples of the moving object 15 also include movable objects such as cranes and belt conveyors.

At least a part of the moving object is the metal portion 16 constituted of a metal material. When the moving object 15 is an automobile, the metal portion 16 is for instance a body of the automobile.

Now, the case is considered where there is a heat source (e.g., direct sunlight) other than the atmosphere as a heat source causing the temperature change of the metal portion 16 of the moving object 15.

The temperature change of the metal portion 16 is influenced by the heat capacity of the metal portion 16. Accordingly, the temperature change of the corrosion sensor 1 that is smaller in size than the moving object 15 (metal portion 16) is different from that of the metal portion 16. The temperature influences the rate of corrosion reaction as well as wet and dry conditions of a water film needed for corrosion reaction.

Thus, it is preferable that the temperature of the corrosion sensor 1 coincides with the temperature of the moving object 15 in order for the corrosion sensor 1 to have good measurement accuracy.

Specifically, it is preferable that the temperature of the reference portion 3 of the corrosion sensor 1 coincides with the temperature of the metal portion 16 of the moving object 15.

For this reason, when the corrosion sensor 1 is attached to the metal portion 16, the reference portion 3 is preferably placed in contact with the metal portion 16 via only the insulating sheet 4.

At this time, in the actual process, the insulating sheet 4 and the metal portion 16 are bonded together using an adhesive, or the insulating sheet 4 and the metal portion 16 are closely attached to each other via a grease and then secured around their perimeter with a sealant, for example. The corrosion sensor 1 is fixed to the metal portion 16 in this manner.

In other words, other than the insulating sheet 4, an adhesive, a grease, or the like may actually be present between the reference portion 3 and the metal portion 16.

Nevertheless, in the present invention, the reference portion 3 of the corrosion sensor 1 is considered to be in contact with the metal portion 16 of the moving object 15 via only the insulating sheet 4.

The thermal conductivity of the adhesive and the grease is preferably not less than 1.0 W/(m·K).

In the case where portions of the corrosion sensor 1 are bonded together (for instance, the reference portion 3 and the insulating sheet 4 are bonded together), the same adhesive as the above is preferably used.

The number of the corrosion sensors 1 attached to one moving object 15 is at least one and may be two or more.

For instance, even in the same moving object 15, the corrosion loss may vary depending on the location of the metal portion 16. In this case, a plurality of corrosion sensors 1 are attached to one moving object 15.

Aside from that, a plurality of corrosion sensors 1 may be attached to one moving object 15 in order to improve the measurement accuracy.

Depending on the shape of the moving object 15, a region where the corrosion sensor 1 can be disposed may be small.

In this case, the corrosion sensor 21 of the second embodiment in which the sensor portion 2 and the reference portion 3 are stacked (FIGS. 3 to 5) is more preferred than the corrosion sensor 1 of the first embodiment in which the sensor portion 2 and the reference portion 3 are arranged in parallel (FIGS. 1 and 2) because the area in contact with the metal portion 16 is smaller.

### <Measurement of corrosion loss>

In the corrosion sensor 1 attached to the moving object 15, constant current is applied from the current source 7, and voltage is measured at the voltage measurement portion 8 and the voltage measurement portion 9, whereby an electric resistance value of each of the sensor portion 2 and the reference portion 3 is obtained. The magnitude of the constant current can be set to any value based on necessary measurement accuracy, electric energy, and the like.

As corrosion of the sensor portion 2 gradually proceeds, the electric resistance value of the sensor portion 2 gradually increases from the initial value.

In contrast, corrosion of the reference portion 3 does not proceed, and the electric resistance value of the reference portion 3 basically stays unchanged from the initial value.

In general, the progress of corrosion of the sensor portion 2 is associated with an increase in the electric resistance value presumably because of the following reason.

As corrosion proceeds, the electric conductor constituting the sensor portion 2 reduces its thickness in the thickness direction thereof. Part of the electric conductor corresponding to the thickness reduction is lost from its surface or replaced with a corrosion product which remains on the surface.

The corrosion product is non-conductive, or even if the corrosion product is conductive, electric conductivity thereof is much lower than that of the original electric conductor.

Accordingly, an increase in the electric resistance value due to corrosion is deemed to be caused by the thickness reduction of the electric conductor constituting the sensor portion 2.

The electric resistance values of the sensor portion 2 and the reference portion 3 are obtained at given regular intervals, and the corrosion loss (corrosion depth) of the sensor portion 2 is calculated (converted) based on the obtained electrical resistance values. The conversion formula for the corrosion loss is expressed by Formula (1) below. $CD = {t}_{i} \left\{\left({R}_{ri}/{R}_{si}\right)-\left({R}_{r}/{R}_{s}\right)\right\}$
CD: corrosion loss (corrosion depth) [µm]
tᵢ: initial thickness of sensor portion [µm]
Rᵣᵢ: initial electric resistance value of reference portion [Ω]
Rₛᵢ: initial electric resistance value of sensor portion [Ω]
Rᵣ: electric resistance value of reference portion at measurement [Ω]
Rₛ: electric resistance value of sensor portion at measurement [Ω]

Based on Formula (1) above, the corrosion loss is calculated under an assumption.

For instance, in the case where the reference portion 3 and the sensor portion 2 both have an initial thickness of "100 µm," the initial electric resistance value (Rᵣᵢ) of the reference portion 3 and the initial electric resistance value (Rₛᵢ) of the sensor portion 2 are both "0.1 Ω", and the electric resistance value (Rᵣ) of the reference portion 3 at the measurement stays the same as the initial value "0.1 Ω" while the electric resistance value (Rₛ) of the sensor portion 2 increases to "0.11 Ω" as corrosion proceeds, the corrosion loss is calculated as 100 x {(0.1/0.1) - (0.1/0.11)} according to Formula (1) above, resulting in "9.1 µm.

### <Temperature compensation and the like>

In the corrosion sensor 1, it is preferable to further perform temperature compensation.

Specifically, in the case where the electric resistance value of the reference portion 3 changes, this change is considered to be caused by a temperature change, and a measured corrosion loss is preferably corrected based on this change.

Generally, the electric resistance of metal increases with increasing temperature.

For example, in the above assumption, it is supposed that the temperature has increased from the initial temperature, and the electric resistance value (Rₛ) of the sensor portion 2 at the measurement is not "0.11 Ω" but "0.121 Ω" with an increase of 10%.

In this case, the calculation of 100 x {(0.1/0.1) - (0.1/0.121)} based on Formula (1) above would result in corrosion loss of "17 µm," and this is largely different from the corrosion loss "9.1 µm," that is supposed to be obtained.

Meanwhile, if, for example, the electric resistance value (Rᵣ) of the reference portion 3 is similarly changed from "0.1 Ω" to "0.11 Ω" with an increase of 10% due to the temperature increase, the corrosion loss can be corrected based on this change.

Specifically, the corrosion loss is calculated as 100 x {(0.1/0.1) - (0.11/0.121)} to result in "9.1 µm" based on Formula (1) above, and thus, the same result is obtained as that obtained when there is no temperature change.

When the temperature of the reference portion 3 is adjusted to coincide with the temperature of the metal portion 16 as described above, the effectiveness of the temperature compensation further increases.

A subject executing the measurement of the corrosion loss and the temperature compensation as above is not particularly limited and is for instance the logger 11.

The logger 11 calculates the corrosion loss of the sensor portion 2 while performing the temperature compensation, and records the calculated corrosion loss and other data.

Various kinds of data, such as the corrosion loss, recorded on the logger 11 are uploaded to cloud via communication using the communication device 12.

The user of the corrosion sensor 1 can know the corrosion loss of the sensor portion 2 and the like at any time, even at a place away from the moving object 15, by downloading the uploaded data.

The user of the corrosion sensor 1 can use the obtained corrosion loss for various purposes.

For example, maintenance can be carried out on the moving object 15 such that the corrosion loss does not exceed the corrosion allowance of the metal portion 16 (acceptable corrosion loss in the metal portion 16) during an expected period of use of the moving object 15.

Alternatively, a metal material of the metal portion 16 can be selected based on the obtained corrosion loss such that the corrosion loss does not exceed the corrosion allowance of the metal portion 16 during an expected period of use of the moving object 15.

### EXAMPLES

The invention is specifically described below by way of examples. However, the invention is not limited to the examples described below.

A test was conducted under the conditions shown in Table 1 below. Specifically, a corrosion sensor was attached to a moving object, and a test of corrosion loss measurement was conducted as described below.

### <Moving object>

First, as a moving object (including a movable object) having a metal portion, an automobile, a heavy equipment machine, a crane, and a belt conveyor were chosen. The kinds of chosen moving objects are shown in Table 1 below.

The metal portions of the automobile, heavy equipment machine, and crane are bodies thereof. The metal portion of the belt conveyor is a belt (conveyor belt).

### <Corrosion sensor>

A corrosion sensor was attached to the metal portion of the chosen moving object. One corrosion sensor was attached to each moving object.

### <<Nos. 1 to 20: electric resistance type corrosion sensor>>

In Nos. 1 to 20, an electric resistance type corrosion sensor 21 of the second embodiment (FIGS. 3 to 5) was used as the corrosion sensor.

### (Nos. 1 to 5 and 7 to 20)

A more detailed description is made with reference to FIGS. 3 to 5. A reference portion 3 was disposed on an insulating sheet 4 (thickness: 25 µm, thermal conductivity: 1.0 W/(m·K), thermal transmittance: 40 kW/(m²·K)) made of polyimide.

On the insulating sheet 4, a resin 5 being an epoxy resin was flatly applied to have a thickness of the reference portion 3, thereby covering the opposite lateral surfaces of the reference portion 3.

An insulator 10 being a plastic film (polyvinyl chloride, thickness: 100 µm) was disposed thereon, and further, a sensor portion 2 was disposed thereon such that the sensor portion 2 and the reference portion 3 are superposed via the insulator 10.

On the insulator 10, the resin 5 being an epoxy resin was flatly applied to have a thickness of the sensor portion 2, thereby covering the opposite lateral surfaces of the sensor portion 2.

For the conductors (metal material) constituting the sensor portion 2 and the reference portion 3, an elongated conductor (entire length: 200 mm, width: 10 mm, thickness: 200 µm) was used, and the same metal material as that of a metal portion of the moving object (e.g., a body of the automobile) under test was used.

The insulating sheet 4 of the corrosion sensor 21 as above was adhered to the metal portion of the moving object (e.g., a body of the automobile) under test by use of a high thermal conductive adhesive (thermal conductivity: 2.1 W/(m·K)).

### (No. 6)

A corrosion sensor 21 (FIGS. 3 to 5) was made in the same manner as that in Nos. 1 to 5 and 7 to 20 except that an insulating sheet 4 (thickness: 25 µm, thermal transmittance: 12 kW/(m²·K)) with a thermal conductivity of 0.3 W/(m·K) was used, and the corrosion sensor 21 was adhered to a metal portion of a moving object.

In "Insulating sheet thermal conductivity" space in Table 1 below, "Low" was put for No. 6, and "-" was put for the other examples.

### <<Nos. 21 to 30>>

As the corrosion sensor, use was made of an ACM type corrosion sensor, a corrosion sensor based on electrochemical impedance spectroscopy (EIS), or a quartz crystal microbalance (QCM) type corrosion sensor.

The measurement of the corrosion loss using the ACM type corrosion sensor was performed by reference to Non-Patent Literatures 1 and 2.

### <Direct sunlight>

The metal portion of each moving object has a region exposed to direct sunlight which is a heat source other than the atmosphere, and a region not exposed to direct sunlight. In "Heat source" space in Table 1 below, "Applicable" was put when the corrosion sensor was attached to a region exposed to direct sunlight, and "-" was put when the corrosion sensor was attached to a region not exposed to direct sunlight.

### <Temperature synchronization>

In the case of using the electric resistance type corrosion sensor, "Applicable" was put in "Temperature synchronization" space in Table 1 below when the reference portion of the corrosion sensor was brought into contact with and attached to the metal portion of the moving object via only the insulating sheet.

In contrast, when a spacer (stainless steel sheet "SUS 304", thickness: 2 mm) was disposed between the insulating sheet and the metal portion of the moving object, "-" was put in "Temperature synchronization" space in Table 1 below.

Similarly, "-" was put when a corrosion sensor being not of the electric resistance type was used.

### <Environment>

The corrosion environment of each moving object was set to being in the atmosphere. However, the region where the moving object was used was varied among the examples.

In "Environment" space in Table 1 below, "Small airborne salt amount" was put when the moving object was used in a region A where the airborne salt amount was small, "Large airborne salt amount" was put when it was used in a region B where the airborne salt amount was larger than in the region A, and "Ice melting salt" was put when it was used in a snowy cold region where ice melting salt was spread.

Further, in "Environment" space in Table 1 below, "+ soil" was added when the moving object was used in the state of contacting soil, and "+ coal" was added when used in the state of contacting coal.

### <Duration>

The duration of test was about three months (89 days to 105 days).

### <Corrosion loss (sensor)>

After the duration of test passed, the corrosion loss (unit: µm) was measured using the corrosion sensor attached to the metal portion of the moving object. When the electric resistance type corrosion sensor was used, the corrosion loss of the sensor portion was measured. The measured corrosion loss was put in "Sensor" column of "Corrosion loss" space in Table 1 below.

### <Corrosion loss (specimen)>

For the purpose of comparison with the corrosion loss of the corrosion sensor, a specimen to be described later was attached to the metal portion of the moving object to be adjacent to the corrosion sensor and was allowed to corrode during the duration of test. After the duration of test passed, the corrosion loss of the specimen was obtained.

While, ideally, the corrosion loss of the metal portion of the moving object should be actually measured, it is difficult to obtain it in a non-destructive manner; therefore, the corrosion loss was obtained using the specimen instead.

To the automobile, a cold rolled steel sheet (SPC material) of 150 mm x 70 mm x 0.8 mm was attached as the specimen.

To the heavy equipment machine, the crane, and the belt conveyor, rolled steel for welded structure (SM material) of 150 mm x 70 mm x 0.8 mm was attached as the specimen.

The corrosion loss of the specimen was obtained according to ISO 8407.

Specifically, after the duration of test passed, rust of the specimen was removed by use of a pickling liquid prepared by adding 3.5 g of hexamethylenetetramine to 500 mL of hydrochloric acid and diluting the mixture to 1000 mL, and then the corrosion loss (unit: µm) was calculated from the difference in mass before and after the test.

The calculated corrosion loss was put in "Specimen" column of "Corrosion loss" space in Table 1 below.

### <Error>

The error (unit: %) between the corrosion loss obtained using the corrosion sensor and the corrosion loss of the specimen was obtained.

As the absolute value of the error is smaller, the accuracy of the corrosion loss obtained using the corrosion sensor can be rated as better. In particular, when the absolute value of the error is not more than 10%, the accuracy can be rated as even better.

**[Table 1]**

| Table 1 (1/2) | | | | | | | | | | | |
|---|---|---|---|---|---|---|---|---|---|---|---|
| No. | Moving object | Corrosion sensor | Direct sunlight | Temperature synchronization | Insulating sheet thermal conductivity | Environment | Duration [day] | Corrosion loss [*µ* m] | | Error [%] | Remarks |
| | | | | | | | | Sensor | Specimen | | |
| 1 | Automobile | Electric resistance type | - | - | - | Small airborne salt amount | 97 | 5.5 | 6.0 | 8.3 | IE |
| 2 | Automobile | Electric resistance type | - | - | - | Large airborne salt amount | 96 | 9.6 | 9.2 | -4.3 | IE |
| 3 | Automobile | Electric resistance type | - | - | - | Ice melting salt | 89 | 47.7 | 45.5 | -4.8 | IE |
| 4 | Heavy equipment machine | Electric resistance type | Applicable | Applicable | - | Small airborne salt amount | 103 | 7.7 | 8.3 | 7.2 | IE |
| 5 | Heavy equipment machine | Electric resistance type | Applicable | Applicable | - | Large airborne salt amount | 103 | 18.3 | 17.8 | -2.8 | IE |
| 6 | Heavy equipment machine | Electric resistance type | Applicable | Applicable | Low | Large airborne salt amount | 103 | 14.9 | 17.8 | 16.3 | IE |
| 7 | Heavy equipment machine | Electric resistance type | Applicable | Applicable | - | Small airborne salt amount + soil | 103 | 12.9 | 12.3 | -4.9 | IE |
| 8 | Heavy equipment machine | Electric resistance type | Applicable | Applicable | - | Large airborne salt amount + soil | 103 | 15.0 | 14.4 | -4.2 | IE |
| 9 | Heavy equipment machine | Electric resistance type | Applicable | Applicable | - | Small airborne salt amount + coal | 103 | 34.5 | 33.1 | -4.2 | IE |
| 10 | Heavy equipment machine | Electric resistance type | Applicable | Applicable | - | Large airborne salt amount + coal | 103 | 40.2 | 38.1 | -5.5 | IE |
| 11 | Heavy equipment machine | Electric resistance type | Applicable | - | - | Small airborne salt amount + coal | 103 | 27.2 | 33.1 | 17.8 | IE |
| 12 | Heavy equipment machine | Electric resistance type | Applicable | - | - | Large airborne salt amount + coal | 103 | 30.4 | 38.1 | 20.2 | IE |
| 13 | Crane | Electric resistance type | Applicable | Applicable | - | Small airborne salt amount | 105 | 7.6 | 8.3 | 8.4 | IE |
| 14 | Crane | Electric resistance type | Applicable | Applicable | - | Large airborne salt amount | 105 | 20.1 | 20.3 | 1.0 | IE |
| 15 | Crane | Electric resistance type | Applicable | Applicable | - | Small airborne salt amount + coal | 105 | 33.5 | 32.2 | -4.0 | IE |
| 16 | Crane | Electric resistance type | Applicable | Applicable | - | Large airborne salt amount + coal | 105 | 35.8 | 34.0 | -5.3 | IE |
| 17 | Belt conveyor | Electric resistance type | - | - | - | Small airborne salt amount | 105 | 6.6 | 7.1 | 7.0 | IE |
| 18 | Belt conveyor | Electric resistance type | Applicable | Applicable | - | Large airborne salt amount | 105 | 16.0 | 16.2 | 1.2 | IE |
| 19 | Belt conveyor | Electric resistance type | - | - | - | Small airborne salt amount + coal | 105 | 31.1 | 29.8 | -4.4 | IE |
| 20 | Belt conveyor | Electric resistance type | Applicable | Applicable | - | Large airborne salt amount + coal | 105 | 32.5 | 31.2 | -4.2 | IE |
| IE: Inventive Example | | | | | | | | | | | |

| Table 1 (2/2) | | | | | | | | | | | |
|---|---|---|---|---|---|---|---|---|---|---|---|
| No. | Moving object | Corrosion sensor | Direct sunlight | Temperature synchronization | Insulating sheet thermal conductivity | Environment | Duration [day] | Corrosion loss [*µ*m] | | Error [%] | Remarks |
| | | | | | | | | Sensor | Specimen | | |
| 21 | Automobile | ACM | - | - | - | Small airborne salt amount | 97 | 11.3 | 6.0 | -88.3 | CE |
| 22 | Automobile | ACM | - | - | - | Ice melting salt | 89 | 72.6 | 45.5 | -59.6 | CE |
| 23 | Crane | ACM | Applicable | - | - | Small airborne salt amount + coal | 105 | 155.3 | 32.2 | -382.3 | CE |
| 24 | Crane | ACM | Applicable | - | - | Large airborne salt amount + coal | 105 | 191.0 | 34.0 | -461.8 | CE |
| 25 | Belt conveyor | ACM | Applicable | - | - | Large airborne salt amount | 105 | 21.4 | 16.2 | -32.1 | CE |
| 26 | Automobile | EIS | - | - | - | Small airborne salt amount | 97 | 9.9 | 6 | -65 | CE |
| 27 | Heavy equipment machine | EIS | Applicable | - | - | Small airborne salt amount + coal | 103 | 43.2 | 33.1 | -30.5 | CE |
| 28 | Heavy equipment machine | EIS | Applicable | - | - | Large airborne salt amount + coal | 103 | 25.5 | 38.1 | 33.1 | CE |
| 29 | Automobile | QCM | - | - | - | Small airborne salt amount | 97 | ≧1.0 | 6.0 | ≧83.3 | CE |
| 30 | Belt conveyor | QCM | - | - | - | Small airborne salt amount | 105 | ≧1.0 | 7.1 | ≧85.9 | CE |

| | | | | | | | | | | | |
|---|---|---|---|---|---|---|---|---|---|---|---|
| CE: Comparative Example | | | | | | | | | | | |

### <Summary of evaluation results>

As shown in Table 1 above, in Nos. 1 to 20 (Inventive Examples) using the electric resistance type corrosion sensor, the absolute value of the error was small, and it can be said that an accurate corrosion loss of the metal portion of the moving object was able to be acquired, as compared to Nos. 21 to 30 (Comparative Example) using the corrosion sensor of another type.

Of Nos. 1 to 20, Nos. 11 and 12 (which are examples with "Applicable" for "Direct sunlight" but "-" for "Temperature synchronization") had the absolute value of the error of more than 10%.

In contrast, Nos. 1 to 10 and 13 to 20 had the absolute value of the error of not more than 10% and hence better accuracy.

In addition, of Nos. 1 to 20, comparing Nos. 5 and 6 being different only in the thermal conductivity of the insulating sheet, No. 5 with a high thermal conductivity of the insulating sheet had a smaller absolute value of the error and hence better accuracy than No. 6 with a low thermal conductivity of the insulating sheet.

The corrosion losses of Nos. 21 to 25 using the ACM type corrosion sensor tended to be larger than the corrosion loss of the specimen in general.

In particular, the corrosion losses of Nos. 23 and 24 where the test was conducted with the moving object contacting coal were greatly different from the corrosion loss of the specimen. This is probably because coal dust piled up on the ACM type corrosion sensor retained water from rain or the like, so that the output was high throughout the duration of test.

Similarly to Nos. 21 to 25 using the ACM type corrosion sensor, Nos. 26 to 28 using the corrosion sensor based on EIS had a large absolute value of the error and hence insufficient accuracy.

With Nos. 29 and 30 using the QCM type corrosion sensor, the corrosion loss was substantially unable to be measured, probably because of the following reason: the QCM type corrosion sensor performs the measurement using a thin film in principle, and the corrosion loss exceeded the thickness of the thin film under the test conditions adopted this time.

### <Additional test: No. 5b>

The test of corrosion loss measurement (referred to as "No. 5b" for convenience) was conducted in the same manner as No. 5 except that ten corrosion sensors were attached to one moving object (heavy equipment machine).

The ten corrosion sensors were attached to regions exposed to direct sunlight on the moving object in the same manner as in No. 5.

As a result, the error between the corrosion loss obtained using the corrosion sensors and the corrosion loss of the specimen was 1.8%, and hence, the accuracy was even better than that of No. 5.

### [REFERENCE SIGNS LIST]

- 1:: corrosion sensor (first embodiment)
- 2:: sensor portion
- 2a:: terminal of sensor portion
- 2b:: terminal of sensor portion
- 3:: reference portion
- 3a:: terminal of reference portion
- 3b:: terminal of reference portion
- 4:: insulating sheet
- 5:: resin
- 6:: cover
- 7:: current source
- 8:: voltage measurement portion
- 9:: voltage measurement portion
- 10:: insulator
- 11:: logger
- 12:: communication device
- 15:: moving object
- 16:: metal portion
- 21:: corrosion sensor (second embodiment)

## Claims

1. A method of measuring corrosion loss, the method comprising:
attaching a corrosion sensor to a metal portion of a moving object having the metal portion constituted of a metal material, wherein the corrosion sensor is an electric resistance type corrosion sensor including a sensor portion constituted of an electric conductor exposed to a given environment and a reference portion constituted of an electric conductor isolated from the given environment, and each of the electric conductors is made of a same metal material as the metal material constituting the metal portion; and
measuring the corrosion loss of the sensor portion based on an electric resistance value of the reference portion and an electric resistance value of the sensor portion.

2. The method of measuring corrosion loss according to claim 1,
wherein the corrosion sensor has an insulating sheet, and
the reference portion is in contact with the metal portion via only the insulating sheet.

3. The method of measuring corrosion loss according to claim 2,
wherein the insulating sheet has a thermal transmittance of not less than 25 kW/(m²·K).

4. The method of measuring corrosion loss according to any one of claims 1 to 3,
wherein the sensor portion and the reference portion are stacked via an insulator.

5. The method of measuring corrosion loss according to any one of claims 1 to 3,
wherein the corrosion loss of the sensor portion as measured is acquired at a place away from the moving object via communication using a communication device.

6. The method of measuring corrosion loss according to claim 4,
wherein the corrosion loss of the sensor portion as measured is acquired at a place away from the moving object via communication using a communication device.

7. A method of selecting a metal material, the method comprising selecting the metal material constituting the metal portion based on the corrosion loss of the sensor portion that is measured by the method of measuring corrosion loss according to any one of claims 1 to 3.

8. A method of selecting a metal material, the method comprising selecting the metal material constituting the metal portion based on the corrosion loss of the sensor portion that is measured by the method of measuring corrosion loss according to claim 4.

9. A method of selecting a metal material, the method comprising selecting the metal material constituting the metal portion based on the corrosion loss of the sensor portion that is measured by the method of measuring corrosion loss according to claim 5.

10. A method of selecting a metal material, the method comprising selecting the metal material constituting the metal portion based on the corrosion loss of the sensor portion that is measured by the method of measuring corrosion loss according to claim 6.
